Europäisches Patentamt

European Patent Office

Office européen des brevets

(11) Numéro de publication: **0 321 351**
A1

# (12) DEMANDE DE BREVET EUROPEEN

(21) Numéro de dépôt: **88403207.9**

(22) Date de dépôt: **16.12.88**

(51) Int. Cl.4: **F 24 J 2/24**
F 24 J 2/36, F 24 J 2/46

(30) Priorité: **17.12.87 FR 8717794**

(43) Date de publication de la demande:
**21.06.89 Bulletin 89/25**

(84) Etats contractants désignés:
**AT BE CH DE ES FR GB GR IT LI LU NL SE**

(71) Demandeur: **Dyevre, Nicolas**
**44, rue Voltaire**
**F-92300 Levallois-Perret (FR)**

**Greaume, Francois**
**45 Avenue Jean Jaurès**
**F-94110 Arcueil (FR)**

**Landler, Yvan**
**12 Boulevard Desgranges**
**F-92330 Sceaux (FR)**

**Rocher, Philippe**
**5, rue Sainte Félicité**
**F-75015 Paris (FR)**

**Vergnet, Marc**
**23, rue Jean Bleuzen**
**F-92170 Vanves (FR)**

(72) Inventeur: **Dyevre, Nicolas**
**44, rue Voltaire**
**F-92300 Levallois-Perret (FR)**

**Greaume, Francois**
**45 Avenue Jean Jaurès**
**F-94110 Arcueil (FR)**

**Landler, Yvan**
**12 Boulevard Desgranges**
**F-92330 Sceaux (FR)**

**Rocher, Philippe**
**5, rue Sainte Félicité**
**F-75015 Paris (FR)**

**Vergnet, Marc**
**23, rue Jean Bleuzen**
**F-92170 Vanves (FR)**

(54) **Echangeur-radiateur-absorbeur et capteur solaire.**

(57) Dispositif d'échangeur thermique-absorbeur solaire, souple et enroulable, comportant une base (1), en composition polymérique souple et une couche thermoconductrice (2) en métal ou en alliage métallique de faible épaisseur, caractérisé en ce qu'il présente, sous forme monobloc, un réseau d'échange thermique (4) et un circuit de collecte/distribution du fluide caloporteur (5a, 5b), formés, à la mise en service du dispositif, par déformation de leurs parois sous l'effet de la pression du fluide caloporteur.

Echangeur-radiateur-absorbeur isolé, formé du dispositif précedent et d'une couche d'isolation thermique.

Capteur solaire vitré enroulable, formé de l'échangeur-radiateur-absorbeur précédent et d'un élément de vitrage souple.

EP 0 321 351 A1

Bundesdruckerei Berlin

## Description

### Echangeur-Radiateur-Absorbeur et capteur solaire

La présente invention concerne un absorbeur solaire-échangeur thermique comportant des canaux transversaux pour la fonction échange du fluide caloporteur et des canaux longitudinaux, collecteur et distributeur du fluide caloporteur, ledit absorbeur solaire-échangeur thermique pouvant être utilisé seul ou, en combinaison avec des éléments de vitrage et/ou d'isolation, pour constituer soit un échangeur-radiateur-absorbeur isolé soit un capteur solaire vitré.

Les crises énergétiques qui frappent, depuis quelques années tous les pays ont conduit à la recherche d'utilisation des énergies renouvelables, au centre desquelles l'énergie solaire occupe une place non négligeable. Cet état de fait explique l'abondance des idées et des réalisations dans ce domaine.

On connait, en effet, un très grand nombre de publications relatives aux capteurs solaires ou dispositifs similaires. C'est ainsi que les brevets français 2.540.228 et allemand 3.041.622 décrivent des capteurs solaires métalliques, donc rigides, alors que les brevets français 2.440.527, 2.380.511, allemand 2.747.188 et americain 4.546.757 exposent des réalisations démontables et que le brevet français 2.519.127 propose un système rétractable par ressort, toutes solutions utilisables lorsque le capteur solaire n'est pas en service.
Diverses inventions, telles celles décrites dans la demande de brevet EP-A-0.070.757 ou dans le modèle d'utilité allemand 7.929.917 concernent des capteurs clos sur la totalité de leur périphérie, c'est-à-dire de dimensions limitées, qui sont assemblés en série ou en parallèle sur site. De tels capteurs ne présentent evidemment pas l'avantage de pouvoir être découpés à la longueur désirée pour l'application ce qui évite l'emploi de dispositifs de raccordement et réduit les pertes de charge dans les canaux de circulation du fluide caloporteur.

D'autres inventions - telles celles exposées dans les brevets américains 4.296.732, 4.080.955, 4.546.757 (déjà cité), et 4.473.066, dans le document WO 79.00225, dans les brevets anglais 1.525.926, 2.097.114 ou 2.099.984 ou encore dans les brevets français 2.307.233, 2.325.886, 2.432.690 et 2.440.527 (déjà cité) - sont caractérisées par une grande complexité de réalisation due, soit au grand nombre d'éléments à assembler soit aux modes d'assemblage retenus, qui mettent en jeu, séparément ou en combinaison, des techniques de soudure, de couture et de collage.

D'autres réalisations - comme celles proposées dans les brevets européens 0.012.028, anglais 2.048.460, américain 4.524.757, français 2.531.193 et canadien 1.172.532 - ne semblent pas devoir présenter un rendement très intéressant soit en raison du nombre ou de la longueur limitée des canaux, soit à cause de la conductibilité thermique des matériaux constitutifs.

Parmi les réalisations intéressantes, le brevet américain 4.256.087 décrit un capteur de grande longueur, enroulable, et, de plus, flottant, destiné à être disposé dans une piscine. Son inconvénient majeur est d'être réalisé, pour assurer sa légèreté, sa flottabilité et la possibilité d'enroulement en dehors des périodes d'utilisation, par assemblage de feuilles plastiques et, par conséquent, son rendement thermique ne peut être que faible en raison de la conductibilité thermique insuffisante des matériaux utilisés.

L'invention décrite dans le brevet français 2.513.363, qui propose un mode de réalisation simple, présente l'inconvénient d'être rigide et lourd car il comporte une plaque métallique épaisse sans laquelle il se déformerait sous l'effet de la pression. Il en est de même de l'invention décrite dans le document DE-A-2.747.188 (déjà cité), qui comporte une plaque métallique suffisemment rigide pour supporter une circulation piétonnière.

Ces dispositifs ne présentent donc pas de possibilité d'enroulement lorsqu'ils ne sont pas utilisés.

L'analyse de l'art antérieur montre donc, à l'évidence, qu'un absorbeur solaire-échangeur thermique léger, aisé à transporter et à manipuler, simple à mettre en place et, de surcroit facile à fabriquer, donc peu coûteux, n'est pas connu.

L'invention a pour objectif de remédier aux inconvénients des solutions connues en proposant un dispositif peu coûteux, léger et enroulable, d'une grande facilité de pose.

L'invention a pour objet un absorbeur solaire-échangeur thermique ou échangeur-radiateur-absorbeur, léger et souple, donc enroulable, constitué d'un composite mixte qui groupe en un élément unique,

 a) un composant polymère/métal, réalisé par association d'un polymère souple et d'une feuille de faible épaisseur d'un métal ou d'un alliage métallique, donc d'un élément à conductibilité thermique élévée
 et

 b) un composant polymère/polymère, réalisé par association d'au moins deux couches de polymères souples de natures identiques ou différentes, ledit échangeur-radiateur-absorbeur pouvant être utilisé seul ou en combinaison avec des éléments d'isolation et/ou de vitrage pour constituer soit un absorbeur solaire-échangeur thermique isolé, soit un capteur solaire vitré à effet de serre.

L' échangeur-radiateur-absorbeur selon l'invention est caractérisé en ce qu'il comporte, sous une forme monobloc, à la fois le réseau d'échange thermique et le circuit de collecte/distribution du fluide caloporteur.

Une autre caractéristique de l'invention réside en ce que les canaux du réseau d'échange thermique et du circuit de collecte/distribution du fluide caloporteur sont réalisés dans des matériaux différents, le premier étant formé dans le composant polymère/métal, le second dans le composant polymère/polymère, lesdits canaux étant formés, à la mise en service, par la déformation des deux éléments des composants polymère/métal et polymère/polymère, sous l'effet de la pression du fluide caloporteur.

Une autre caractéristique de l'invention réside en ce que le rapport de la section des canaux du circuit de collecte/distribution du fluide caloprteur à celui des canaux de réseau d'échange thermique est au moins égal à 4 et préférentiellement supérieur à 6.

L'invention est également caractérisée en ce que le circuit de collecte/distribution du fluide caloporteur est localisé dans le composant polymère/polymère ce qui permet l'optimisation de la circulation dudit fluide dans le réseau d'échange thermique.

Il est, en effet, possible de créer à partir d'un échangeur-radiateur-absorbeur standard, de grande longueur, un échangeur-radiateur-absorbeur modulaire dont la longueur est optimisée, grâce à un calcul par un logiciel prenant en compte le débit du fluide caloporteur, la longueur du réseau d'échange et la température désirée, pour minimiser les pertes de charges et équilibrer les circulations dans les differents modules. Il suffit, en effet, par un moyen mécanique approprié, de réduire ou d'interrompre la circulation dans le circuit de collecte/distribution du fluide caloporteur, afin d'obliger ledit fluide caloporteur à emprunter le réseau d'échange thermique.

Cette transformation de l'échangeur-radiateur-absorbeur de grande longueur en échangeur-radiateur-absorbeur modulaire est rendue possible par la souplesse des parois du circuit de collecte/distribution du fluide caloporteur localisée dans le composant polymère/polymère, que l'on peut obturer, partiellement ou totalement, par simple pincement, par exemple. Les distances des points d'interruption ou de réduction de section du circuit de collecte/distribution du fluide caloporteur résultent des calculs d'optimisation en fonction des paramètres énoncés ci-dessus.

Dans une autre variante, l'invention est également caractérisée en ce que l'échangeur-radiateur-absorbeur à collecteurs/distributeurs intégrés peut être coupé à la longueur désirée et que l'élément ainsi constitué peut être associé facilement, grâce à un dispositif intégré, à des éléments placés en parallèle afin de couvrir de grandes surfaces.

Un autre trait caractéristique de l'invention est sa facilité de pose, par exemple par un système type toile de tente, par accrochage sur câbles tendus, grâce à un système d'oeillets intégrés.

Enfin, un avantage de l'invention est la possibilité de fabrication des differents dispositifs par un procédé continu.

L'échangeur-radiateur-absorbeur, objet de l'invention, peut également être utilisé comme élément essentiel d'un capteur solaire par combinaison avec une isolation thermique et/ou un vitrage souple, éléments intégrés au capteur solaire.

Le capteur solaire ainsi constitué gardera des caracteristiques de légèretè et de souplesse proches de celles de l'échangeur-radiateur-absorbeur et pourra rester enroulable grâce au choix des matériaux additionnels constituant l'isolation thermique et le vitrage.

L'échangeur-radiateur-absorbeur selon l'invention, monobloc, est composé des éléments ci-dessous :
- une base constituée d'un matériau polymérique souple, dans laquelle peut être éventuellement inséré un élément de renforcement,
- une feuille mince, de largeur inférieure à celle de la base, constituée de métal ou d'alliage métallique, donc ayant une conductibilité thermique elevée, qui occupe la majeure partie de la surface du matériau polymérique souple et lui est intimement liée, sauf sur certaines zones destinées à constituer le réseau d'échange thermique avec le fluide caloporteur,
- au dessus de la partie latérale du matériau polymérique souple formant la base - sur la partie laissée libre par la feuille mince de métal ou d'alliage metallique et débordant légèrement sur la couche thermoconductrice-une couche d'un matériau polymérique souple, - de même nature que celle du polymère constituant la base ou d'une nature différente, -, intimement liée à ladite couche polymérique de la base, sauf dans au moins deux zones disposées longitudinalement, destinées à former le circuit de collecte/distribution du fluide caloporteur.

Le choix des matériaux autorise la réalisation de formes complexes, permettant une grande latitude dans la conception du réseau d'échange thermique, en minimisant les pertes de charge et évite le vrillage de l'échangeur-radiateur-absorbeur sous la pression du fluide caloporteur, vrillage qui ne manquerait pas de se produire si le circuit de collecte/distribution du fluide caloporteur n'était pas constitué dans le composant polymère/polymère.

En effet, il résulte de la description de la constitution précédente que l'échangeur-radiateur-absorbeur se présente sous une forme plane avant mise en service, le réseau d'échange thermique et le circuit de collecte/distribution du fluide caloporteur ne se formant - par déformation des matériaux constitutifs sous l'effet de la pression du fluide caloporteur - que lorsque l'échangeur-radiateur-absorbeur est en fonctionnement.

Les caractéristiques et les variantes de l'échangeur-radiateur-absorbeur et du capteur solaire, objets de l'invention, seront mieux comprises à la lecture de la description accompagnant les dessins, dans lesquels :

- la figure 1 représente schématiquement les éléments constitutifs de l'échangeur-radiateur-absorbeur ;

- la figure 2 illustre la construction de l'échangeur-radiateur-absorbeur avant la mise en service ;

- la figure 3 met en évidence la configuration de l'ensemble des canaux, c'est-à-dire du réseau d'échange thermique et du circuit de collecte/distribution du fluide caloporteur ;

- la figure 4 établit l'importance des paramètres de conception de l'échangeur-radiateur-absorbeur ;

- la figure 5 propose une disposition pour le raccordement des canaux du reseau d'échange thermique au circuit de collecte/distribution du fluide caloporteur ;

- la figure 6 illustre l'utilisation de l'échangeur-radiateur-absorbeur sous forme modulaire ;

- la figure 7 montre un échangeur-radiateur-absorbeur à circuit de collecte/distribution du fluide caloporteur interrompu, afin d'optimiser le cheminement hydraulique ;

- la figure 8 présente quelques variantes de l'échangeur-radiateur-absorbeur destinées à simplifier la mise en oeuvre sur site.

- la figure 9 détaille deux dispositifs de raccordement des collecteurs/distributeurs aux circuits d'alimentation et de distribution du fluide caloporteur ;

- la figure 10 schématise la constitution d'un capteur solaire vitré

- la figure 11 illustre la variation du coefficient de perte thermique d'un ensemble échangeur-radiateur-absorbeur isolé thermiquement, avec ou sans vitrage en fonction de l'épaisseur de la couche d'isolation thermique.

- la figure 12 représente, schématiquement, une section du dispositif assemblé,

- la figure 13 illustre un procédé de fabrication en continu de l'échangeur-radiateur-absorbeur simple ou isolé, ou du capteur solaire vitré.

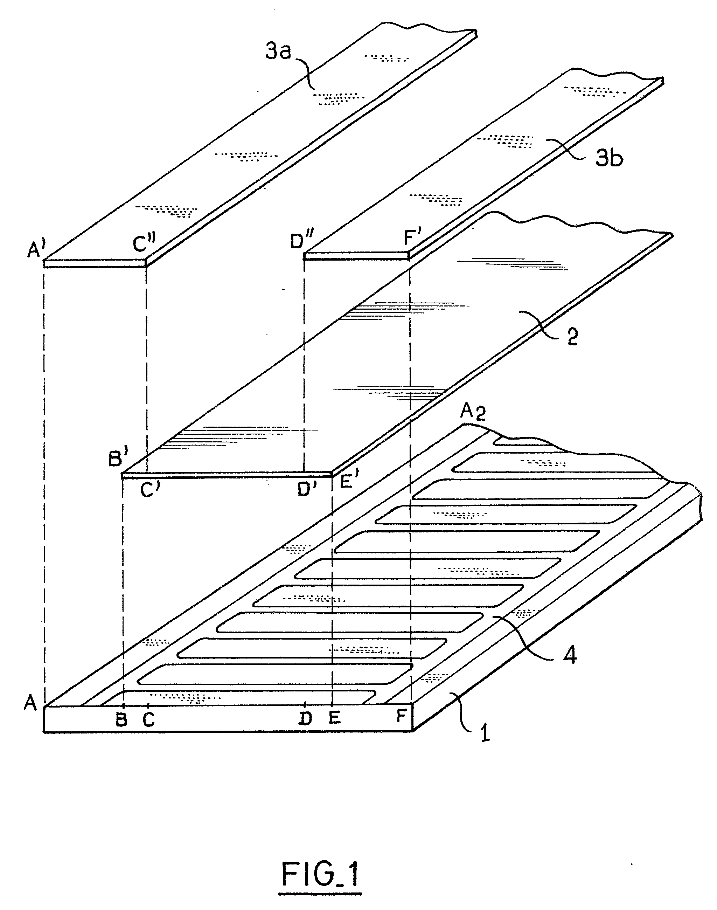

La figure 1 illustre les éléments constitutifs de l'échangeur-radiateur-absorbeur selon l'invention.

La base (1) de l'échangeur-radiateur-absorbeur est constituée d'une couche de matériau polymérique souple tel que -à titre d'exemples non limitatifs - une composition élastomérique ou un matériau thermoplastique souple. Elle peut, également, comporter, noyé dans son épaisseur, un élément de renforcement constitué de tissus ou de câbles textiles ou métalliques.

La couche thermo-conductrice (2) est constituée d'une feuille d'épaisseur faible d'un matériau à conductibilité thermique élevée tel qu'un métal ou un alliage métallique. Tous les métaux et alliages métalliques peuvent convenir mais, préférentiellement, le matériau constitutif de la couche thermiquement conductrice (2) sera choisi dans la classe des métaux ou des alliages métalliques ayant une bonne résistance à la corrosion (afin de ne pas nécessiter de traitements spéciaux), déformables (ce qui permet d'utiliser des épaisseurs de quelques diziemes de millimètres) et non fragiles (pour éviter des ruptures sous les contraintes internes de pression).

Avantageusement, en cas d'utilisation en capteur solaire. la couche thermoconductrice (2) recevra un revêtement très fin de couleur noire, afin d'augmenter l'absorption et de réduire les pertes par ré-émission si ledit revêtement est sélectif.

Les deux éléments latéraux complémentaires (3a) et (3b) sont constitués d'une couche étroite de polymère souple, de même nature que celui de la base (1) ou d'une nature différente.

La composition du polymère souple constituant la base (1) de l'échangeur-radiateur-absorbeur et celle constituant les éléments latéraux complémentaires est choisie de manière à ce qu'elle adhère - avec ou sans interposition supplémentaire d'agent adhésif - à la couche thermoconductrice (2).

C'est, par exemple, ce qui peut être obtenu - de manière connue antérieurement - par l'utilisation de laiton pour la réalisation de la couche thermoconductrice (2) et d'un polymère à base d'une composition élastomérique comportant un sel de cobalt dans la base (1) et les éléments complémentaires (3a) et (3b).

Le même effet d'adhésion, sans apport d'agent adhésif, peut être obtenu par une formulation spéciale du polymère constitutif de la base (1) de l'échangeur-radiateur-absorbeur, formulation qui consiste, en particulier, en l'addition de promoteurs d'adhésion à la matrice polymérique.

Dans ce cas, un réseau d'agent anticollant (4) sera déposé en surface de la base (1) afin de former des "réserves de collage", zones où l'on empêche la base (1) d'adhérer à la couche thermoconductrice (2), ce qui constituera, après vulcanisation, le réseau d'échange thermique et le circuit de collecte/distribution du fluide caloporteur.

Dans une variante de réalisation, lorsque le polymère souple constitutif de la base (1) ne présente pas d'affinité adhésive vis à vis du matériau ou de l'alliage métallique de la couche thermoconductrice (2), il est possible de déposer sur la face supérieure de la base (1) et/ou la face inférieure des éléments latéraux complémentaires (3a) et (3b), ou encore sur la couche thermoconductrice (2), un adhésif convenablement choisi, en réservant les zones des canalisations soit par dépôt partiel d'adhésif sur les zones à assembler, soit par interposition en surface de la base (1) d'une grille de protection de forme adaptée que l'on peut, éventuellement, laisser en place si elle est réalisée dans un matériau qui n'adhère pas à l'un au moins des éléments à assembler, si la totalité de la surface a été recouverte d'adhésif.

L'adhésif peut être constitué d'une dissolution dans un solvant d'une composition polymérique de formulation appropriée ou d'une colle que l'on applique en continu ou au pinceau.

L'adhésif peut également être constitué d'au moins un film, qui, au cours d'un traitement thermique tel que la vulcanisation des composants élastomériques par exemple, viendra assurer la liaison intime entre les éléments constitutifs.

Dans ce cas, il suffira pour l'assemblage de la base (1) et de la couche thermoconductrice (2) de donner au film adhésif la forme adéquate pour qu'il ne recouvre que les surfaces à assembler, la liaison intime entre la base (1) et la couche thermoconductrice (2) ne se produisant pas dans les zones ne comportant pas le film. Cette technique économise l'utilisation d'une grille de protection.

Pour la couche thermoconductrice (2) tout métal ou alliage métallique peut convenir puisque possédant un coefficient de conductibilité thermique élevé.

Il est nécessaire, par ailleurs, que le matériau ou l'alliage métallique choisi soit suffisamment déformable pour accepter une déformation sans rupture sous l'effet de la pression qui sera - en cours d'utilisation - introduite dans le circuit de collecte/distribution du fluide caloporteur; il faut également qu'il ne soit pas sensible à l'attaque corrosive dudit fluide caloporteur, qui est le plus généralement constitué d'eau ou d'eau additionnée de glycol ou d'antigel.

Dans une variante de l'invention, la couche thermoconductrice (2) est constituée d'une feuille de laiton dont la conductibilité thermique est égale à 100 W/m2.°C et dont la capacité de déformation convient à l'invention.

Dans une autre variante de l'échangeur-radiateur-absorbeur, la couche thermoconductrice (2) est constituée d'une feuille d'acier inoxydable, ayant une épaisseur de 7 à 20 centièmes de millimètre.

Pour constituer l'échangeur-radiateur-absorbeur, il est procédé à l'assemblage des divers éléments constitutifs selon l'une des techniques décrites ci-dessus, de manière telle que les points (B') et (E') de la couche thermoconductrice (2) se superposent aux points (B) et (E) de la base (1).

De ce fait, les points (C') et (D') de la couche thermoconductrice (2) viennent se superposer aux points (C) et (D) de la base (1). De la même manière, au cours de l'assemblage, les éléments latéraux complémentaires (3a) et (3b) seront apposés par dessus l'ensemble de la base (1) et de la couche thermoconductrice (2), de façon à ce que le point (C'') de l'élément latéral complémentaire (3a) vienne se superposer au point (C') de la couche thermoconductrice (2) et au point (C) de la base (1), que le point (D'') de l'élément latéral complémentaire (3b) vienne se superposer au point (D') de la couche thermoconductrice (2) et au point (D) de la base (1), de sorte que le point (A') de l'élément complémentaire latéral (3a) se superpose au point (A) de la base (1) et que le point (F') de l'élément latéral complémentaire (3b) se superpose au point (F) de la base (1).

Il y a alors constitution de composants polymère/polymère dans les zones (ABB'A') et (EFF'E') et de composant polymère/métal du type sandwich dans les zones (BCC'C''B') et (DEE'D''D') et du type bicouche dans la zone (CDD'C').

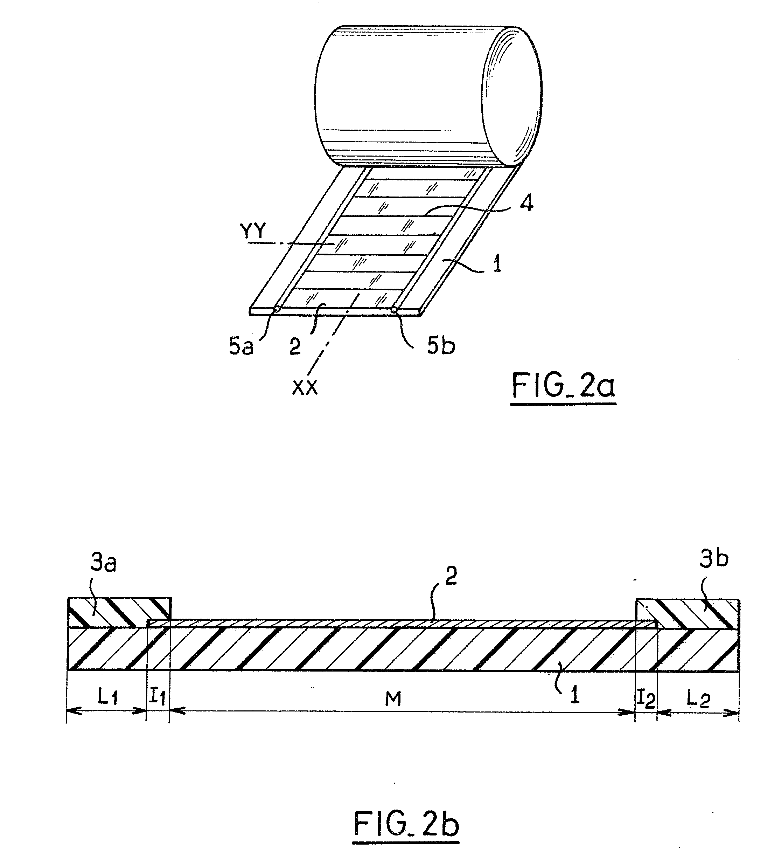

La figure 2 illustre la construction de l'échangeur-radiateur-absorbeur avant mise en service.

La vue 2a montre l'échangeur-radiateur-absorbeur livré sous forme roulée, dans lequel ont été schématisés sous forme visible sur la base (1) en polymère souple et dans la couche thermoconductrice (2), le réseau d'échange thermique (4) et le circuit de collecte/distribution du fluide caloporteur (5a) et (5b).

La vue 2b est une coupe transversale qui met en évidence la disposition des éléments constitutifs de l'échangeu-radiateur-absorbeur, avant la mise sous pression due à l'introduction du fluide caloporteur.

L'échangeur-radiateur-absorbeur, qui est alors complètement plat, comporte 5 zones :
- deux zones latérales (L1) et (L2), réalisées dans le composant polymère/polymère, formé de la base (1) et de la plus grande partie des éléments latéraux complémentaires (3a) et (3b), dans lesquelles viendront se former les collecteurs/distributeurs du circuit de fluide caloporteur, l'ensemble de ces deux zones (L1) et (L2) occupant environ 10 à 15 % de la largeur totale de l'échangeur-radiateur-absorbeur ;
- une zone médiane (M), réalisée dans le composant polymère/métal formé de la base (1) et de la couche thermoconductrice (2), dans laquelle viendront se former les canaux (6) du réseau d'échange thermique du fluide caloporteur,
et
- deux zones de liaison (l1) et (l2), constituées d'un composant polymère/métal du type sandwich, les côtés de la couche thermoconductrice (2) étant enserrées entre la base (1) et les extrémités des éléments latéraux complémentaires (3a) et (3b).

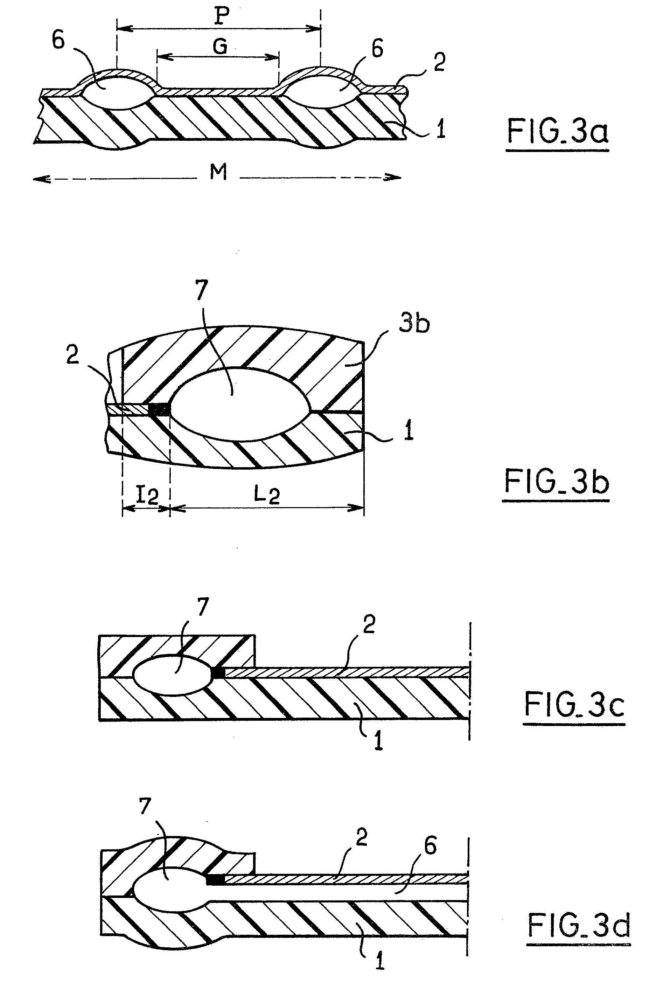

La configuration des canalisations constituant le réseau d'échange thermique et le circuit de collecte/distribution du fluide caloporteur, en cours d'utilisation, est mise en évidence sur les différentes vues de la figure 3.

La vue 3a représente, en coupe longitudinale, c'est-à-dire selon XX de la figure 2a, deux canaux (6) du réseau d'échange thermique du fluide caloporteur dans la zone (M). Chaque canal (6) est formé, lors de la mise sous pression, par la déformation simultanée de la composition polymérique qui constitue la base (1) et de la feuille thermoconductrice de métal ou d'alliage métallique (2).

L'entraxe (P) qui sépare le centre de deux canaux (6) successifs définit la densité du réseau d'échange thermique et, par voie de conséquence, la capacité d'échange de l'échangeur-radiateur-absorbeur. L'entraxe (P) sera donc optimisé de manière à laisser entre deux canaux (6) successifs une zone (G) - dans laquelle la base (1) et la couche thermoconductrice (2) sont intimement liées - d'une largeur suffisante pour résister à l'effort de traction induit par la déformation des matériaux constituant les parois des canaux (6), lors de la mise en service, et assurer le meilleur échange thermique.

Dans le schéma du réseau d'échange thermique, représenté à titre d'exemple non limitatif, le nombre des canaux (6) sera, préférentiellement, supérieur à 10 canaux/mètre de longueur de l'échangeur-radiateur-absorbeur.

La vue 3b représente, schématiquement, en coupe transversale, c'est-à-dire selon YY de la figure 2a, un des collecteurs/distributeurs (7) du circuit de fluide caloporteur, dans les zones (l2) et L2). Le collecteur (7) est formé, lui-aussi, lors de la mise sous pression, par la déformation simultanée des compositions polymériques de l'élément latéral complémentaire (3b) et de la base (1) dans la zone (L2). La zone (l2) comporte l'extrémité de la couche thermoconductrice (2), intimement liée à l'élément latéral complémentaire (3b) ainsi qu'à la base (1) de l'échangeur-radiateur-absorbeur.

Les vues 3c et 3d schématisent, en section transversale, l'ensemble de l'échangeur-radiateur-absorbeur, sous pression, au niveau de la zone (G) pour la vue 3c et au niveau d'un canal (6) du réseau d'échange thermique pour la vue 3d.

Dans la vue 3c, qui représente l'échangeur-radiateur-absorbeur, on remarque la liaison intime entre la couche thermoconductrice (2) et la base (1) et la dimension relativement importante des collecteurs/distributeurs (7) du circuit de fluide caloporteur.

La vue 3d, montre la séparation qui s'est produite entre la couche thermoconductrice (2) et la base (1), sous l'effet de la pression interne du fluide caloporteur, pour former, par déformation de la feuille mince de métal ou d'alliage métallique de la couche thermoconductrice (2) et de la composition polymérique de la base (1) de l'échangeur-radiateur-absorbeur, un canal (6) du réseau d'échange thermique, ici représenté orthogonal à la direction des collecteurs/distributeurs (7) du circuit de fluide caloporteur.

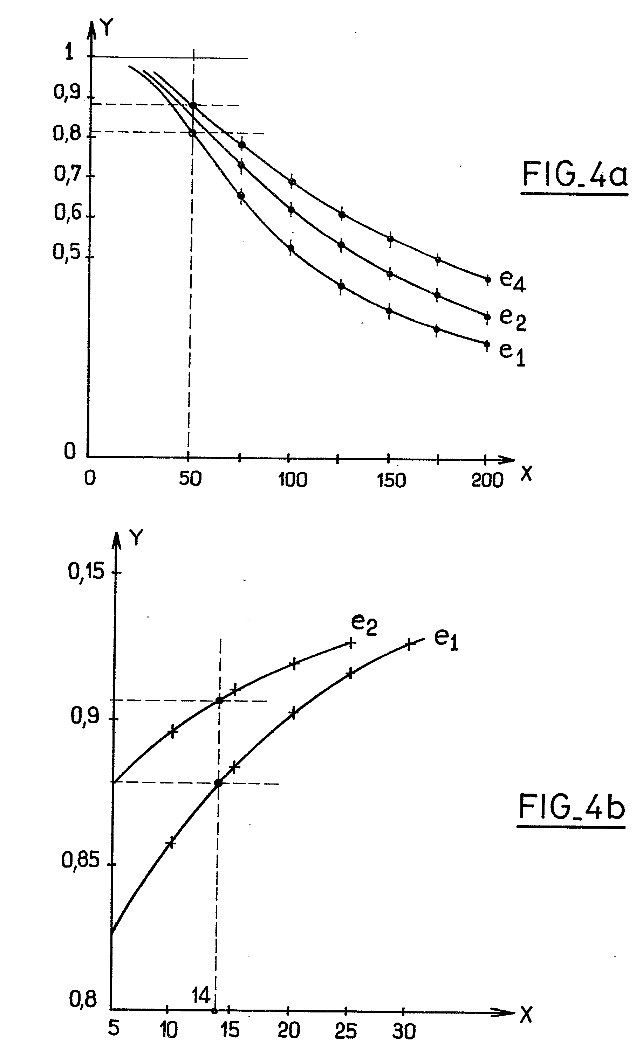

La figure 4 établit l'importance des paramètres de conception, à savoir l'épaisseur de la couche thermoconductrice, le diamètre du collecteur/distributeur et l'entraxe des canaux du réseau d'échange thermique.

La vue 4a illustre, sur un graphique, l'évolution de l'efficacité de l'échangeur-radiateur-absorbeur en fonction de l'entraxe (P) des canaux du réseau d'échange thermique pour trois valeurs de l'épaisseur d'une couche thermoconductrice ayant un coefficient de conductibilité thermique d'environ 100 Watt/mètre carré.°C, le coefficient de conductibilité thermique surfacique de la composition polymérique qui constitue la base étant d'environ 4 Watt/mètre carre.°C.

L'abscisse OX représente l'entraxe (P) des canaux du réseau d'échange thermique, exprimé en millimètres.

L'ordonnée OY représente l'efficacité de l'échangeur-radiateur-absorbeur, au plus égale à 1.

Les courbes e1, e2 et e4 sont obtenues, respectivement, avec une couche thermoconductrice d'épaisseur 1/10, 2/10 et 4/10 de millimètre.

L'analyse de ces trois courbes montre que l'efficacité de l'échangeur-radiateur-absorbeur décroit rapidement pour les valeurs de l'entraxe (P) des canaux du réseau d'échange thermique supérieures à 50 millimètres.

Pour des valeurs de l'entraxe (P) inférieures à 50 millimètres, on note la faible influence de l'épaisseur de la couche thermoconductrice, puisqu'un accroissement d'épaisseur d'un facteur 4 n'augmente l'efficacité que de 0,85 à 0,92.

Compte tenu de ces conclusions, la figure 4b optimise les résultats de la première approche en mettant en évidence les variations de l'efficacité de l'échangeur-radiateur-absorbeur (portée sur l'axe OY), en fonction du diamètre des collecteurs/distributeurs (porté en millimètres sur l'axe OX), pour deux valeurs e1 = 1/10 et e2 = 2/10 de millimètre de la couche thermoconductrice, avec un entraxe (P) des canaux du réseau d'échange thermique de 50 millimètres.

La variation de l'efficacité de l'echangeur-radiateur-absorbeur se situe entre 0,83 et 0,93.

Bien que l'augmentation du diamètre des collecteurs/distributeurs du circuit de fluide caloporteur apporte une amélioration importante, entre 0,83 et 0.93. dans l'efficacité de l'échangeur-radiateur-absorbeur, compte tenu de la résistance aux contraintes qui se développent en service, les limites optimisées des paramètres étudiés sont donc, pour atteindre une efficacité au moins égale à 0,7, et conserver à l'échangeur-radiateur-absorbeur son atout de légèreté :

- une épaisseur de la couche thermoconductrice aussi faible que possible tout en restant compatible avec la résistance à la déformation, donc de l'ordre de quelques diziemes de millimètre,

- un entraxe des canaux du réseau d'échange thermique au plus égal à 75 millimètres,

- des diamètres des collecteurs/distributeurs du circuit de fluide caloporteur aussi grands que possible. Cette condition doit, cependant, être tempérée par l'évolution de la résistance à la pression des collecteurs/distributeurs qui est, dans le cas décrit, 10 bars pour un diamètre du collecteur/distributeur de 30 millimètres, 17 bars pour un diamètre du collecteur/distributeur de 20 millimètres et 25 bars pour un diamètre du collecteur/distributeur de 14 millimètres.

Il en résulte, pour des raisons de sécurité en utilisation, qu'un bon compromis entre l'efficacité de l'échangeur-radiateur-absorbeur et la résistance à la pression peut être atteint en choisissant un diamètre de collecteur/distributeur préférentiellement égal à 25 millimètres.

Cet ensemble de caractéristiques constitue la plage optimisée en efficacité pour le triplet (P) (e) et (H), (P) étant l'entraxe des canaux du réseau d'échange thermique, (e) l'épaisseur de la couche thermoconductrice et (H) le diamètre équivalent (puisque les collecteurs/distributeurs prennent, sous pression, une section ovoïde) des collecteurs/distributeurs du circuit de fluide caloporteur.

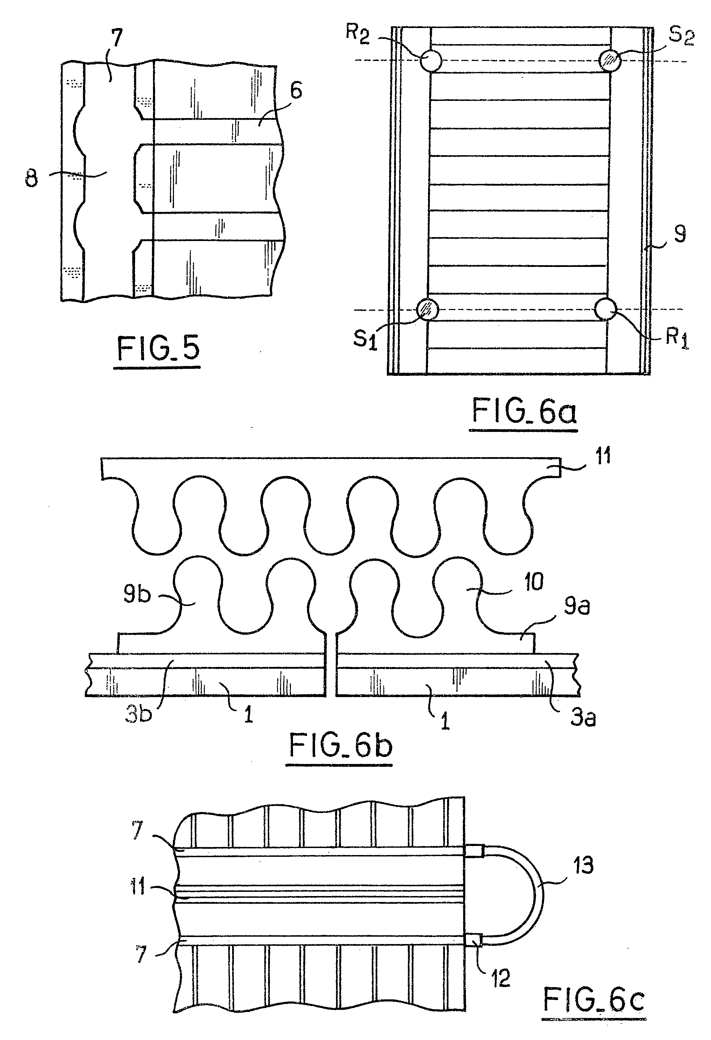

La figure 5 propose une disposition pour le raccordement des canaux du réseau d'échange thermique, au circuit de collecte/distribution du fluide caloporteur.

En effet, il est important de favoriser la circulation du fluide caloporteur dans le réseau d'échange thermique mais également de minimiser les contraintes mécaniques qui s'exercent sur les parois des canaux et des collecteurs/distributeurs quand le dispositif est sous pression.

L'évasement des canaux du réseau d'échange thermique et/ou de la zone correspondante des collecteurs/distributeurs est une des dispositions efficaces pour la réduction des contraintes mécaniques en service.

La conception illustrée sur la figure 5, à titre d'exemple non limitatif, a donné des résultats très satisfaisants. Elle consiste à créer, à l'intersection du canal (6) du réseau d'échange thermique et du collecteur/distributeur (7) des sphères ou des polygones d'intersection (8), - dont les contours peuvent faire partie du tracé initial du réseau d'échange thermique et/ou des collecteurs/distributeurs du circuit de fluide caloporteur, - lesdits sphères ou polygones d'intersection (8) prenant leur forme lors de la mise en pression de l'échangeur-radiateur-absorbeur.

Cette disposition a pour avantage d'absorber les variations dimensionnelles de l'échangeur-radiateur-absorbeur au niveau des canaux du circuit d'échange thermique et des collecteurs/distributeurs. Les sphères ou polygones d'intersection (8) sont, préférentiellement, situés dans la partie de l'échangeur-radiateur-absorbeur constitué du composant polymère/polymère.

La figure 6 illustre une possibilité d'utilisation de l'échangeur-radiateur-absorbeur sous forme modulaire.

La vue 6a présente une variante de l'échangeur-radiateur-absorbeur munie, en surface, de profilés de rives pour l'assemblage (9), souples afin de ne pas nuire aux possibilités d'enroulement de l'échangeur-radiateur-absorbeur. Ces profilés de rives (9) sont situés longitudinalement, près des bords de l'échangeur-radiateur-absorbeur.

L'utilisateur découpe, dans le rouleau qui lui est fourni, la longueur nécessaire et l'équipe de deux éléments de raccordement aux extrémités (R1) et (R2) du circuit de collecte/distribution du fluide caloporteur et de deux bouchons aux extrémités (S1) et (S2).

L'élément modulaire ainsi obtenu peut être associé en parallèle avec un autre élément modulaire similaire d'une manière simple grâce aux profilés de rives (9), constitué de deux éléments symétriques comme le montre, en coupe, la figure 6b.

Les profilés de rives (9a) et (9b) ici représentés avec deux saillies (10) se trouvent placés sur chacun des éléments latéraux complémentaires (3a) et (3b) liés à la base (1) de deux modules d'échangeur-radiateur-absorbeur que l'on justapose.

Un autre profilé (11) - comportant, dans le cas représenté, cinq saillies (10) identiques à celles des profilés de rives (9a) et (9b) est enfoncé à force dans les deux profilés de rives (9a) et (9b) pour constituer une jonction par "clipsage".

Le raccordement entre eux des circuits de collecte/distribution de fluide caloporteur des deux modules d'échangeur-radiateur-absorbeur est réalisé par des techniques connues telle celle illustrée sur la vue 6c qui propose la liaison entre les collecteurs/distributeurs (7) de chacun des modules d'échangeur-radiateur-absorbeur, liés par le profilé (11), par l'intermédiaire de raccords (12) et d'un tuyau, souple ou rigide (13).

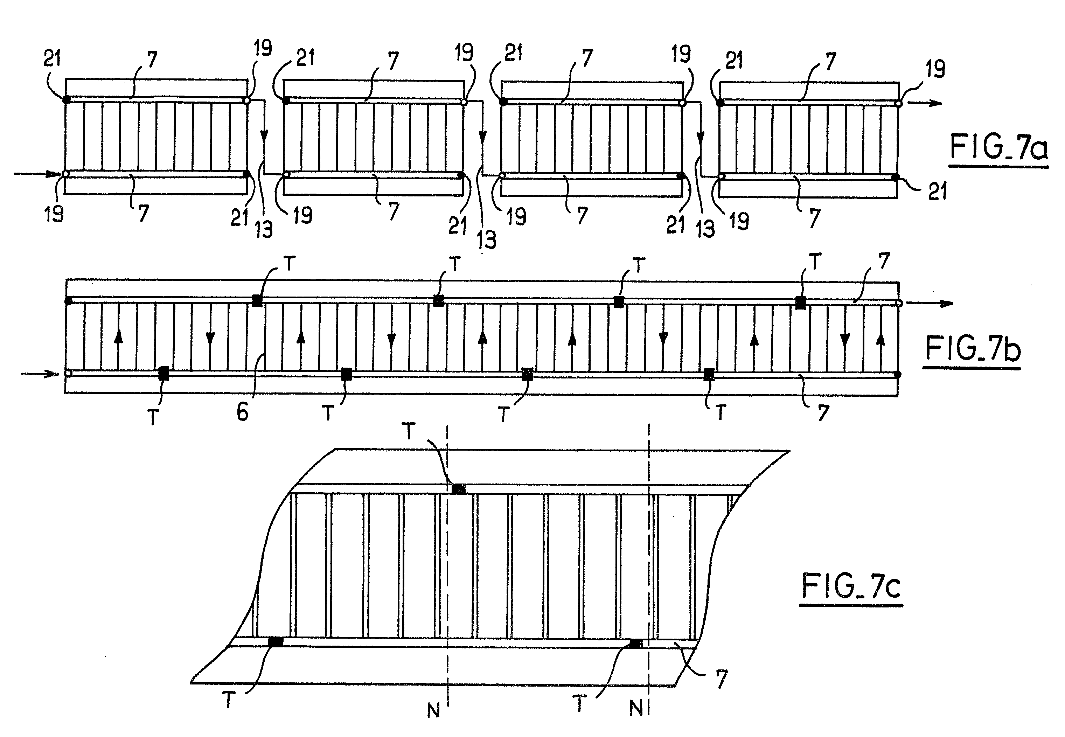

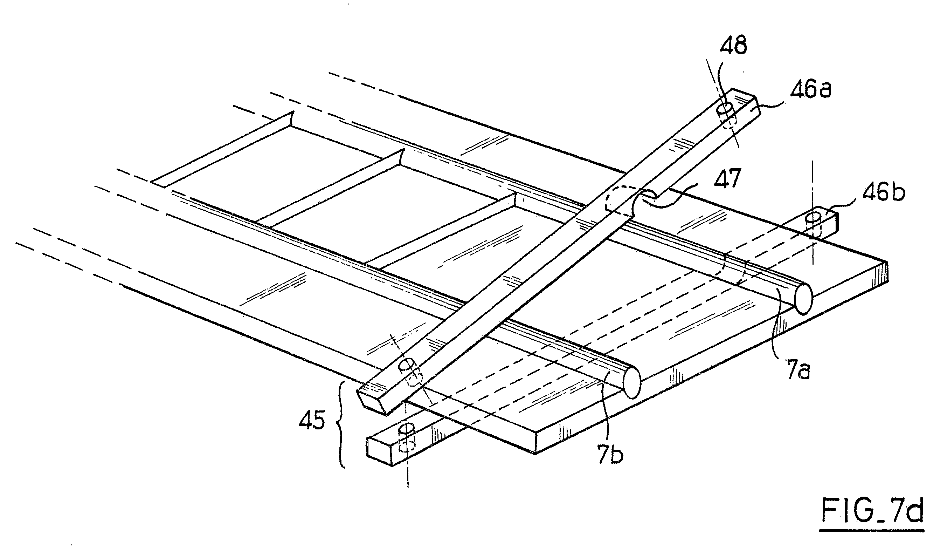

La figure 7 montre un échangeur-radiateur-absorbeur à circuit de collecte/distribution du fluide caloporteur interrompu.

En effet, lors de l'utilisation d'un échangeur-radiateur-absorbeur de grande longueur, comme illustré sur la vue 7a, représentant un montage classique, en série, de 4 échangeurs-radiateurs-absorbeurs modulaires, les pertes de charge sont importantes entre le point d'entrée du fluide caloporteur froid et le point de sortie du fluide caloporteur chaud.

Pour obliger le fluide caloporteur à cheminer dans la plus grande partie du réseau d'échange thermique, chaque élément d'échangeur-radiateur-absorbeur modulaire est équipé de deux raccords (19) disposés à deux extrémités diagonalement opposées des collecteurs/distributeurs du circuit de fluide caloporteur et de deux bouchons (21) également disposés aux deux extrémités diagonalement opposés, non munies des raccords (19), des collecteurs/distributeurs (7) du circuit de fluide caloporteur.

Les flèches indiquent le cheminement dudit fluide caloporteur d'un échangeur-radiateur-absorbeur modulaire à l'échangeur-radiateur-absorbeur modulaire suivant, la liaison entre deux échangeurs-radiateurs-absorbeurs modulaires s'effectuant par le raccordement aux raccords (19) d'un tuyau, généralement flexible (13).

La vue 7b illustre un moyen d'accroître l'efficacité d'un échangeur-radiateur-absorbeur de grande longueur, selon l'invention.

En effet, afin de favoriser le cheminement hydraulique du fluide caloporteur dans le réseau d'échange thermique, il est nécessaire de forcer son passage dans les canaux (6) dudit reseau dont le diamètre est très inférieur à celui des collecteurs/distributeurs (7) du circuit de fluide caloporteur.

Pour ce faire il s'avère efficace d'interrompre lesdits collecteurs/distributeurs (7) du circuit de fluide caloporteur ou, au moins, d'en réduire la section, de place en place par exemple par un pincement de la paroi de l'échangeur-radiateur-absorbeur dans la zone des collecteurs/distributeurs (7) ladite paroi étant souple dans cette zone puisqu'elle est constituée du composant polymère/polymère.

Cette interruption ou cette réduction de section des collecteurs/distributeurs (7) du circuit de fluide caloporteur de l'échangeur-radiateur-absorbeur, aux points (T) oblige le fluide caloporteur à cheminer selon le tracé indiqué par les flèche, à l'intérieur du réseau d'échange thermique et accroit l'efficacité du dispositif.

L'interruption ou la réduction de section des collecteurs/distributeurs (7) du circuit de fluide caloporteur peut être réalisée par des moyens mécaniques appropriés, le plus souvent des pinces conçues à cet effet que l'on met en place aux points (T) dont la position est déterminée par le calcul informatique d'optimisation du dispositif qui prend en compte les differents paramètres de l'installation.

L'interruption ou la réduction de section des collecteurs/distributeurs (7) du circuit de fluide caloporteur peut également être réalisée, au cours de la fabrication de l'échangeur-radiateur-absorbeur, en forçant, de place en place, le collage - qui peut, selon les techniques utilisées, être total ou partiel - des parois desdits collecteurs/distributeurs (7).

Cette technique d'interruption ou de réduction de section des collecteurs/distributeurs de fluide caloporteur s'avère avantageuse, dans tous les cas, au point de vue de l'efficacité du dispositif, mais elle permet, en outre, d'optimiser les dimensions des échangeurs-radiateurs- absorbeurs modulaires, en pré-déterminant les zones de découpe des modules et en évitant ou en réduisant ainsi l'utilisation des bouchons à deux des extrémités d'un module.

C'est ce qu'illustre la vue 7c, vue partielle d'un échangeur-radiateur-absorbeur, mettant en évidence les interruptions des collecteurs/distributeurs (7) du circuit de fluide calporteurs aux points (T) et les lignes (N) selon lesquelles s'effectuera la découpe de l'élément modulaire.

Il est bien évident qu'un échangeur-radiateur-absorbeur modulaire peut se composer d'un ou de plusieurs modules élémentaires tels que définis entre deux lignes (N) successives de découpe.

La vue 7d illustre, à titre d'exemple non limitatif, un moyen mécanique approprié, constitué d'une pince de forme adaptée, pour réaliser l'interruption ou la réduction de section des collecteurs/distributeurs du circuit de fluide caloporteur.

La pince (45) se compose de deux profilés rigides, symétriques par rapport à leur plan de jonction, formant les branches (46a) et (46b), indépendantes l'une de l'autre, comme représenté, ou qui peuvent être liées à l'une de leurs extrémités par un système de charnière. Chacune des branches (46a) et (46b) comporte un alésage (47), en forme de demi-cylindre, dont la section est au moins égale à la moitié de la section des collecteurs/distributeurs du circuit de fluide caloporteur, après leur mise en pression.

Selon que la pince (45) est, ou non, munie d'un système de charnière, chacune des branches (46a) et (46b) est percée à l'une de ses extrémités, ou aux deux extrémités, d'un trou (48), destiné à recevoir un élément de fixation des branches entre elles.

Après serrage de la pince (45) par ledit élément de fixation, l'alésage (47) de chacune des deux branches (46a) et (46b) vient entourer, sans le serrer, le collecteur/distributeur du circuit de fluide caloporteur (7a), laissant libre la totalité de sa section, alors que la partie droite de chacune des deux branches (46a) et (46b) viendra écraser les parois du collecteur/distributeur du circuit de fluide caloporteur (7b) permettant selon la pression exercée d'obturer partiellement ou totalement ledit collecteur/distributeur (7b).

Les pinces (45) seront disposé de manière alternée c'est-à-dire d'une façon telle que le collecteur/distributeur partiellement ou totalement obturé soit, alternativement, le collecteur/distributeur (7a) puis le collecteur/distributeur (7b).

Lesdites pinces (45), qui sont donc disposées de place en place, aux points optimisés par le calcul informatique, jouent, de plus, le rôle de raidisseurs transversaux, le raidissement longitudinal étant créé par l'effet poutre produit par la mise sous pression des collecteurs/distributeurs du circuit de fluide caloporteur.

Outre l'avantage majeur d'accroissement de l'efficacité du dispositif, la technique d'interruption des collecteurs/distributeurs de fluide caloporteur apporte une sécurité en utilisation, en réduisant le nombre de raccords nécessaires donc en diminuant les risques de fuites. C'est donc, de ce fait, un apport économique important.

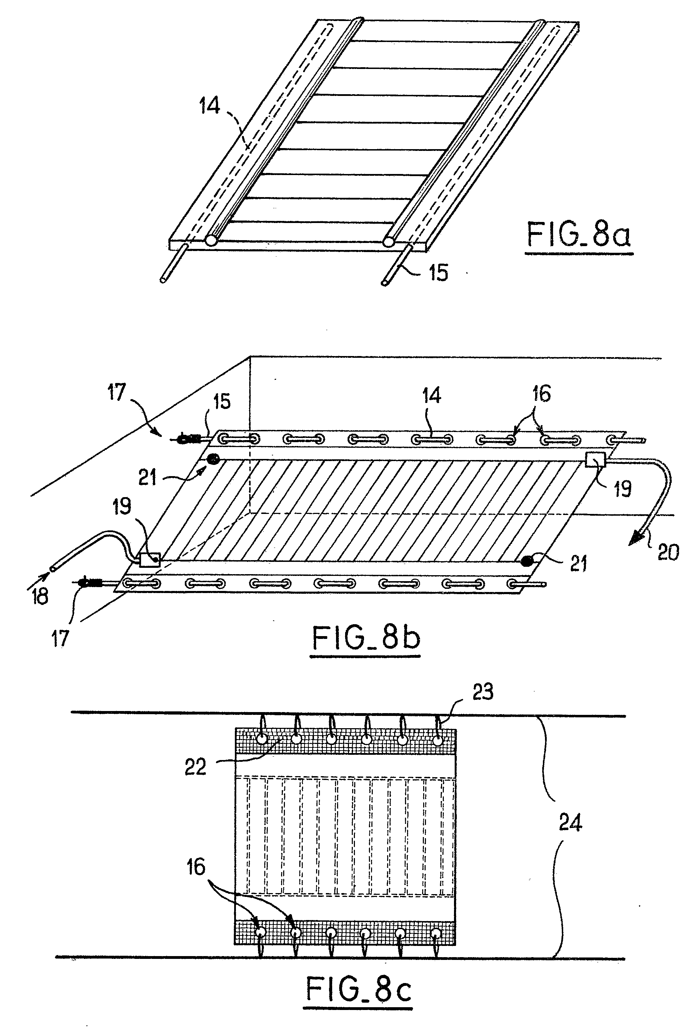

La figure 8 présente quelques variantes de l'échangeur-radiateur-absorbeur destinées à simplifier la mise en oeuvre - souvent coûteuse - sur site, en incluant des dispositifs de fixation qui s'inspirent des structures "câbles et toile" du type tentes ou auvents.

La variante de la vue 8a comporte un câble de fixation (14) noyé dans le composant polymère/polymère et disposé longitudinalement par rapport à l'échangeur-radiateur-absorbeur. L' échangeur-radiateur-absorbeur est alors fixé par les extrémités (15) dépassant dudit câble par l'intermédiaire de tout système mécanique adapté, par exemple un serre-câble.

Dans le même esprit, la variante de la vue 8b propose une disposition dans laquelle le câble de fixation (14) est inséré dans un ensemble d'oeillets (16) positionnés dans le composant polymère/polymère au voisinage des rives. La vue 8b illustre, d'ailleurs, un échangeur-radiateur-absorbeur installé sur une terrasse, la fixation sur le mur se faisant par les extrémités (15) du câble (14) par l'intermédiaire d'un système mecanique (17).

Le raccordement de l'échangeur-radiateur-absorbeur à la source froide externe d'alimentation en fluide caloporteur (18) et au circuit extérieur de distribution du fluide caloporteur chaud (20) se fait par l'intermediaire de raccords (19), les extrémités non utilisées des collecteurs/distributeurs étant fermées par des bouchons (21).

La variante illustrée sur la vue 8c utilise également le système des oeillets (16) positionnés dans le composant polymère/polymère qui comporte un renforcement (22), textile ou metallique, disposé longitudinalement sur les rives de l'échangeur-radiateur-absorbeur. Lesdits oeillets (16) sont équipés de simples pinces ou de crochets (23), antérieurement connus, qui permettent de fixer l'échangeur-radiateur-absorbeur sur deux câbles (24) pré-tendus ou que l'on tend après la mise en place de l'échangeur-radiateur-absorbeur.

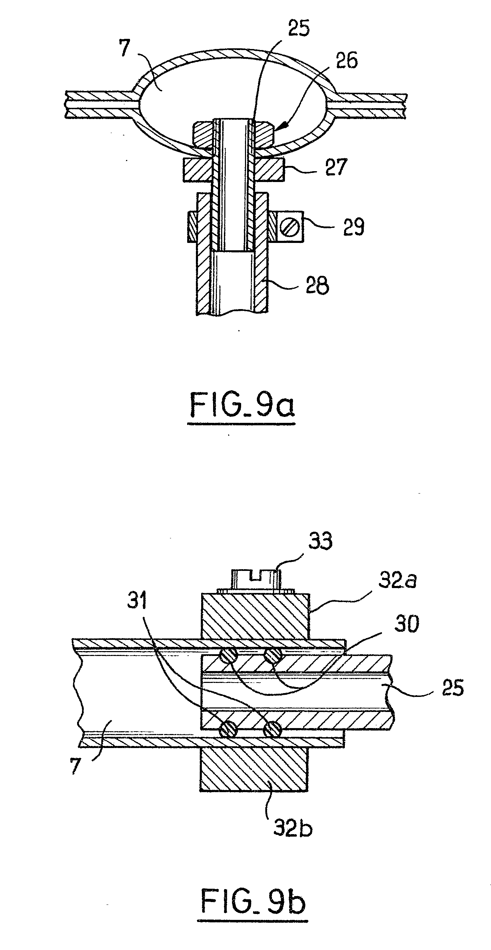

En ce qui concerne le raccordement des collecteurs/distributeurs à la source frcide externe d'alimentation du fluide caloporteur froid ou au circuit externe de distribution du fluide caloporteur chauffé par le dispositif, deux solutions sont proposées sur la figure 9.

La vue 9a montre, en section transversale, la mise en place, dans le collecteur/distributeur (7) du circuit de fluide caloporteur, du système de raccordement constitué d'une tubulure (25) maintenue dans le collecteur/distributeur (7) par un écrou (26) venant appuyer la paroi inférieure dudit collecteur/distributeur sur un collet rigide (27), octogonal, solidaire de la structure, le tuyau d'alimentation en fluide froid ou de sortie de fluide chauffé par le dispositif (28) étant serré sur ladite tubulure (25) par un collier adapté (29).

La vue 9b illustre, en section longitudinale, un autre moyen de raccordement du tuyau d'alimentation en fluide caloporteur froid ou de distribution de fluide caloporteur chaud au collecteur/distributeur (7) par l'intermédiaire d'une tubulure métallique (25) munie de deux gorges (30) destinées à recevoir deux joints (31) pour assurer l'étanchéité. La tubulure (25) est alors bloquée par deux demi-coques métalliques (32a) et (32b) serrées par des vis (33).

Il est évident, pour l'homme de l'art que l'échangeur-radiateur-absorbeur peut combiner, dans une même réalisation, différents dispositifs parmi ceux décrits comme éléments d'association de modules en parallèles, de fixation ou de raccordement.

L'échangeur-radiateur-absorbeur objet de l'invention, décrit ci-dessus peut être utilisé seul ou en combinaison avec une isolation thermique et, éventuellement, un élément de vitrage, pour accroître son efficacité en réduisant les pertes thermiques, sans perdre les avantages de légèreté et de souplesse qui caractérisent l'échangeur-radiateur-absorbeur. Une telle combinaison sera désignée, dans la suite de la description par les termes d' "échangeur-radiateur-absorbeur isolé", lorsqu'elle est utilisée sans vitrage mais avec isolation thermique, et de "capteur solaire vitré" lorsque l'échangeur-radiateur-absorbeur isolé comporte, outre l'isolation thermique, l'élément de vitrage.

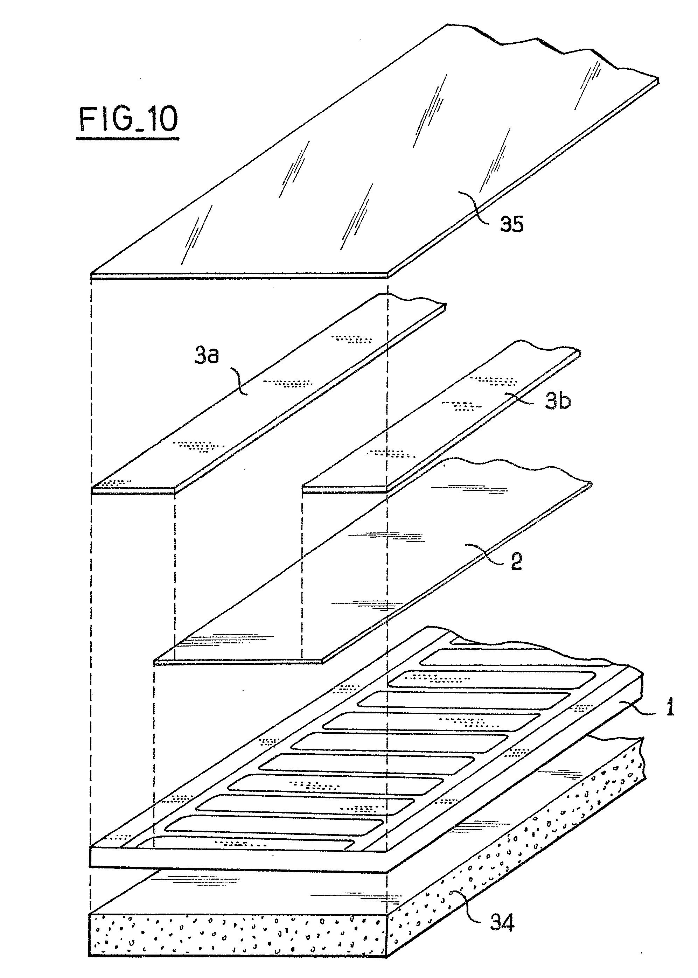

Le capteur solaire vitré devient alors constitué de l'ensemble des éléments de la figure 10. Aux constituants précédemment décrits, - à savoir la base (1) en composition polymérique, la couche thermoconductrice (2) en métal ou en alliage métallique et les deux éléments latéraux complémentaires (3a) et (3b), viennent s'ajouter, à la partie inférieure, une couche isolante (34), constituée d'un matériau souple polymérique cellulaire, qui pourra éventuellement être intimement liée à la base (1) et, à la partie supérieure, un élément de vitrage (35), constitué, préférentiellement, d'un film polymerique fin et transparent.

La couche isolante (34) en matériau souple polymérique sera choisie d'une densité faible, par exemple inférieure à 400 kg/mètre cube, afin de conserver au dispositif sa caractéristique de légèreté. Ladite couche isolante (34) pourra comporter un ou plusieurs éléments de renforcement, par exemple constitués de tissus ou de câbles textiles ou métalliques.

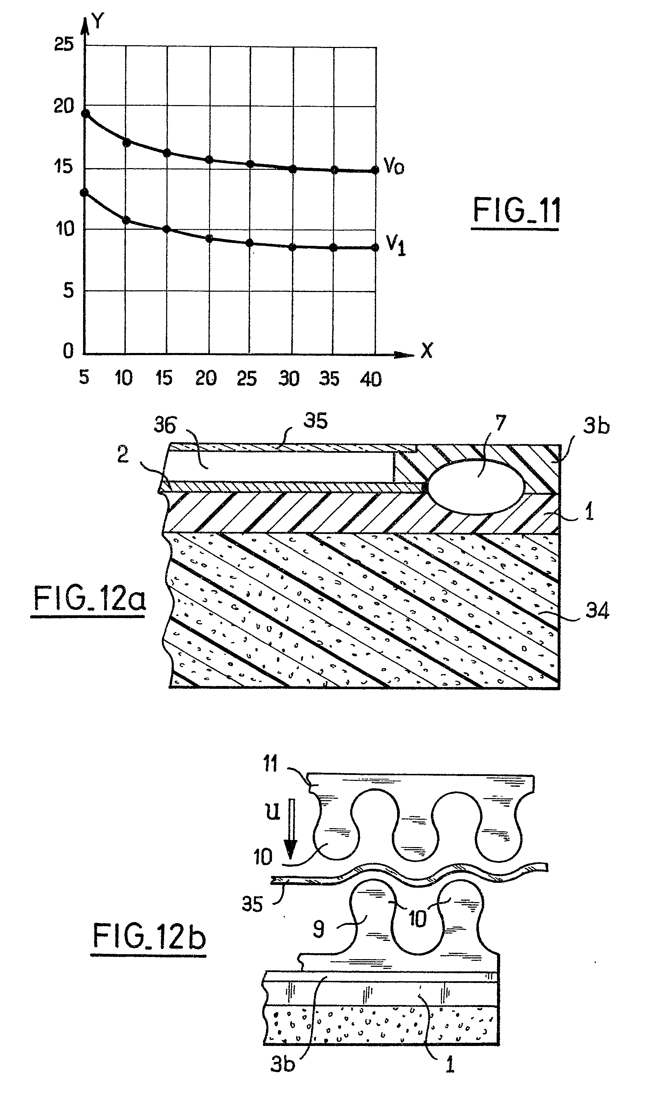

L'épaisseur optimale de la couche isolante (34) a été déterminée en fonction de l'évolution du facteur de perte. La figure 11 illustre la variation du coefficient de perte thermique (K) en fonction de l'épaisseur de la couche isolante, pour un matériau polymérique cellulaire réticulé, à cellules fermées, ayant une masse spécifique de 200 kg/m3 et un coefficient de conductibilité thermique de 0,040 Watt/mètre carré.°C, selon que l'ensemble comporte ou non un vitrage.

L'axe OX représente l'épaisseur de la couche isolante en millimètres.

L'axe OY représente le coefficient (K) de perte thermique exprimé en Watts par mètre carré et par degré centigrade. La courbe Vo est obtenue avec un dispositif sans vitrage, alors que la courbe V1 est obtenue avec un dispositif vitré.

Les deux courbes Vo et V1 sont parallèles, leur différence mettant en évidence l'efficacité du vitrage contre les pertes par convection.

Au delà de 25 millimètres d'épaisseur de la couche isolante, la diminution de pertes thermiques est très faible et le coefficient de perte global se stabilise autour de 15 W/m2.°C sans vitrage et de 9,5 W/m2.°C avec vitrage. Afin de conserver au dispositif sa souplesse et sa légèreté, l'épaisseur de la couche isolante sera donc préférentiellement choisie limitée à 25 millimètres environ.

Le dispositif ainsi constitué de l'echangeur-radiateur-absorbeur et de la couche isolante, - dit échangeur-radiateur-absorbeur isolé - reste souple et enroulable. Le dispositif complet, réalisé après assemblage des différents constituants est représenté sur la figure 12.

La vue 12a, schématise la constitution du dispositif optimalisé au point de vue des épaisseurs de la couche isolante (34) qui limite les pertes par conduction de la base (1) et de la couche thermoconductrice (2).
L'optimisation porte également sur le diamètre équivalent du collecteur/distributeur (7) du circuit de fluide caloporteur.

Le vitrage (35), constitué d'un film polymérique souple détermine avec la couche thermoconductrice (2) et la paroi de l'élément latéral complémentaire (3b) une chambre close (36), remplie d'air, qui limite les pertes par convection et provoque un effet de serre.

La vue 12b détaille une possibilité de mise en place du vitrage (35) qui en permet un remplacement aisé au cas où il serait sali, rayé ou déchiré.

Le procédé consiste à utiliser les profilés (9) et (11) antérieurement décrits pour la liaison de deux modules d'échangeur-radiateur-absorbeur, et à y engager, avant clipsage, le film souple constituant le vitrage (35). Lorsque l'on applique une force U, pour introduire les saillies (10) du profilé de jonction (11) dans les évidements entre les saillies (10) du profilé de rive (9), fixé sur l'élément latéral complémentaire (3b) associé par l'intermédiaire de la base (1) à la couche isolante (34), le film (35) - souple - est engagé à force et emprisonné entre les profilés d'assemblage (9) et (11).

Ce dispositif de mise en place du vitrage (35) étant démontable permet de remplacer ledit vitrage à tout moment. Il peut être complété, si l'utilisateur le désire, par un dispositif de serrage mécanique tel que, de place en place, des boulons traversants ou des pinces.

Utilisant, avec un échangeur-radiateur-absorbeur enroulable grâce à la souplesse des matériaux constitutifs, un élément de vitrage souple, puisque constitué d'un film polymérique transparent, et/ou une couche d'isolation en composition polymérique souple, d'épaisseur limitée, l'échangeur-radiateur-absorbeur isolé, comme le capteur solaire vitré, restent souples et enroulables et présentent des caractéristiques de légèreté voisines de celles de l'échangeur-radiateur-absorbeur simple.

L'échangeur-radiateur-absorbeur simple possède, à vide, un poids de 3 à 6 Kg/mètre carré qui se compare très avantageusement à celui des dispositifs conventionnels. Ayant, en service, une faible masse en fluide caloporteur, de l'ordre de 1 à 3 litres par mètre carré, l'échangeur-radiateur-absorbeur, en charge, présente un poids de 4 à 9 Kg/mètre carré.

Un avantage supplémentaire de l'échangeur-radiateur-absorbeur simple, de l'échangeur-radiateur-absorbeur isolé ou du capteur solaire vitré réside dans la possibilité de fabrication en grande longueur, par des procédés en continu.

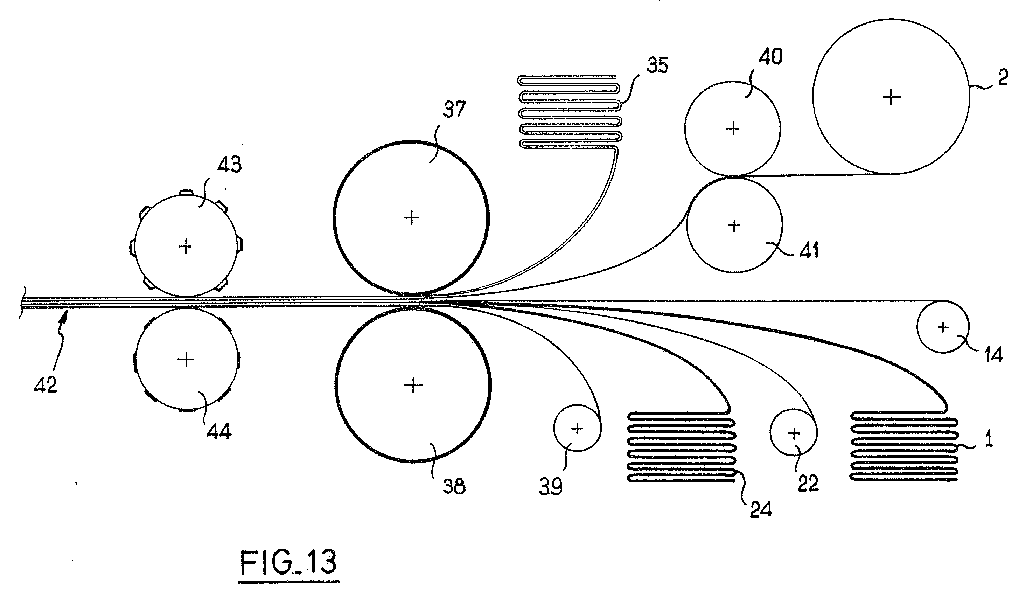

La figure 13 schématise une méthode préférentielle de réalisation d'une variante particulière du capteur solaire vitré, étant entendu que la même technique s'applique à l'échangeur-radiateur-absorbeur isolé puisqu'il suffit de ne pas introduire le film polymérique constituant le vitrage et à l'échangeur-radiateur-absorbeur simple puisqu'il suffit de n'introduire ni le film polymérique constituant le vitrage, ni la feuille en composition polymérique cellulaire constituant la couche d'isolation.

Le procédé de réalisation consiste à alimenter une calandre, ici schématisée par les cylindres supérieur (37) et inférieur (38) avec les éléments constitutifs du dispositif, c'est-à-dire, dans l'exemple décrit, en se limitant aux constituants principaux :
- optionnellement, au moins un tissu (39) de la largeur de l'échangeur-radiateur-absorbeur, destiné au renforcement de la couche d'isolation thermique ;

- éventuellement, la couche isolante (24), constituée d'une feuille de 15 à 25 millimètres d'épaisseur, d'un matériau polymérique cellulaire, ladite couche isolante n'étant utilisée que pour l'échangeur-radiateur-absorbeur isolé et pour le capteur solaire vitré ;

- optionnellement, un tissu (22), de faible largeur, destiné au renforcement des rives de l'échangeur-radiateur-absorbeur, ledit tissu de renforcement n'étant utilisé que dans le cas où l'échangeur-radiateur-absorbeur est muni d'oeillets de fixation ;

- une feuille de composition élastomérique dont la formulation est adaptée à l'adhérence à la couche thermoconductrice, pour constituer la base (1) de l'échangeur-radiateur-absorbeur ;

- optionnellement, un câble (14) destiné à la fixation sur site de l'échangeur-radiateur-absorbeur, ledit câble étant disposé à proximité des rives de l'échangeur-radiateur-absorbeur, pour les variantes d'échangeur-radiateur-absorbeur utilisant ce type d'accrochage ;

- la feuille mince de métal ou d'alliage métallique destinée à constituer la couche thermoconductrice (2) : ladite feuille passera entre deux cylindres (40) et (41) pour recevoir, dans les zones appropriées, un agent anticollant qui déterminera le tracé du réseau d'échange thermique et des collecteurs/distributeurs du circuit de fluide caloporteur ;

- et, enfin, optionnellement, un film mince de matériau polymérique transparent constituant le vitrage (35), ledit film n'étant utilisé que pour la réalisation du capteur solaire vitré.

Par action de la pression et de la chaleur, ces différents éléments constitutifs sont pré-assemblés à la sortie des cylindres (37) et (38) de la calandre et forment l'ébauche (42) de l'échangeur-radiateur-absorbeur simple, de l'échangeur-radiateur-absorbeur isolé ou du capteur solaire vitré, selon les cas.

Pour la réalisation de la variante qui comporte des oeillets destinés à faciliter la pose sur site de l'échangeur-radiateur-absorbeur simple ou isolé ou du capteur solaire vitré, l'ébauche (42) passe ensuite dans un dispositif comportant des éléments (43) et (44) qui effectuent la pose desdits oeillets.

Les différentes opérations du procédé conduisant à la réalisation de l'ébauche (42) sont suivies d'un traitement thermique qui assure l'adhésion de différents constituants et, lorsque la base (1) et/ou les éléments latéraux complémentaires (3a) et (3b) sont constitués d'une matrice élastomérique, la vulcanisation de ladite base (1) et des éléments latéraux complémentaires (3a) et (3b).

Ce traitement thermique peut être réalisé de manière continue par un procédé tel le bain de sel, le tunnel chauffant, le passage entre les rouleaux d'un matériel appelé "Rotocure" ou toute autre technique appropriée, utilisée de manière courante dans l'industrie de transformation des polymères.

Les dispositifs, objets de l'invention, qu'ils se présentent sous la forme d'un échangeur-radiateur-absorbeur simple, d'un échangeur-radiateur-absorbeur isolé ou d'un capteur solaire vitré, présentent l'ensemble des caractéristiques suivantes :

- ils sont légers, souples et enroulables et peuvent donc être facilement transportés, stockés et manipulés pour la mise en place sur site ;

- ils deviennent plats et rigides, en service, après mise sous pression du circuit de collecte/distribution du fluide caloporteur ;

- grâce à leur souplesse, ils peuvent être ré-enroulés, pour être plus aisément stockés en dehors des périodes d'utilisation ;

- ils intègrent, dans une même construction monobloc, les collecteurs/distributeurs du circuit de fluide caloporteur et le réseau d'échange thermique et ne nécessitent donc aucun équipement supplémentaire ;

- ils peuvent être découpés, dans le rouleau de livraison, à la longueur désirée et sont donc modulaires ;

- ils comportent, dans une variante, des éléments internes ou des éléments mécaniques externes destinés à provoquer une réduction ou une interruption de la section des collecteurs/distributeurs du circuit de fluide caloporteur, de manière à favoriser le cheminement hydraulique dudit fluide caloporteur et à améliorer l'efficacité du dispositif ;

- ils peuvent être équipés, de façon optionnelle, de profilés de rives, longitudinaux, qui en permettent l'assemblage en parallèle, pour couvrir des surfaces importantes ;

- ils comportent, sous forme intégrée, des éléments de fixation qui en simplifient la pose sur site ;

- ils sont fiables en service, en raison de leur simplicité de conception, l'élément métallique de la couche thermoconductrice étant choisi, entre autres qualités, pour ses caractéristiques de résistance à la corrosion par le fluide caloporteur, et l'élément de vitrage, dans la variante constituant le capteur solaire vitré, pouvant être facilement remplacé.

- ils peuvent être fabriqués, en grande longueur, par des procédés en continu qui rendent leur réalisation peu onéreuse.

L'échangeur-radiateur-absorbeur simple ou isolé et le capteur solaire vitré trouvent leurs applications en tant que capteurs d'énergie solaire, par exemple dans les dispositifs de chauffage de l'eau des piscines ou de l'eau à usage domestique. Ils sont également utilisables en tant que radiateur ou cloison d'habitation.

L'homme de l'art peut, bien entendu, apporter à l'échangeur-radiateur-absorbeur simple ou isolé et au capteur solaire vitré, objets de l'invention, ainsi qu'à leurs variantes et au procédé de réalisation, décrits et illustrés à titre d'exemples non limitatifs, diverses modifications, sans sortir du cadre de l'invention.

## Revendications

1°) Dispositif d'échangeur thermique-absorbeur solaire, souple et enroulable, comportant au moins une base (1), réalisée dans une composition polymérique souple et une couche thermoconductrice (2), constituant un réseau d'échange thermique composé de canaux transversaux (6) et un circuit de collecteurs/distributeurs (7) pour le fluide caloporteur se formant par déformation de leurs parois sous l'effet de la pression, caractérisé en ce qu'il est réalisé sous forme d'un composite mixte, comportant

- un composant polymère/polymère constitué de la base (1) en matériau polymérique souple et de chacun des éléments latéraux complémentaires (3a) ou (3b), et

- d'un composant polymère/métal, constitué, au moins, de la base (1) et de la couche thermoconductrice (2), les collecteurs/distributeurs (7) du circuit de fluide caloporteur étant formés par absence de liaison adhésive entre les éléments constitutifs, sur des zones disposées longitudinalement, près des rives du composite polymère/polymère et le réseau d'échange thermique étant formé de canaux (6), résultant de l'absence de liaison adhésive entre les éléments constitutifs, sur des zones disposées transversalement, dans le composite polymère/métal.

2°) Dispositif d'échangeur thermique-absorbeur solaire selon la revendication 1, caractérisé en ce que sa masse est au plus égale à 6 Kg par mètre carré, grâce à l'utilisation, pour la couche thermoconductrice (2) d'une feuille de métal ou d'alliage métallique d'une épaisseur au plus égale à 40 centièmes de millimètre.

3°) Dispositif d'échangeur thermique-absorbeur solaire selon l'une des revendications 1 à 2, caractérisé en ce que le raccordement des canaux (6) du réseau d'échange thermique aux collecteurs/distributeurs (7) du circuit de fluide caloporteur présente une section élargie (8), de forme sphérique ou polygonale.

4°) Dispositif d'échangeur thermique-absorbeur solaire selon l'une des renvendications 1 à 3, caractérisé en ce que la base (1) est réalisée dans une composition polymérique souple, comportant dans sa formulation des promoteurs d'adhérence au métal ou à l'alliage metallique de la couche thermoconductrice (2) et en ce qu'un film, empéchant l'adhérence des éléments constitutifs, est interposé dans les zones destinées à créer les collecteurs/distributeurs (7) du circuit de fluide caloporteur ainsi que les canaux (6) du réseau d'échange thermique.

5°) Dispositif d'échangeur thermique-absorbeur solaire selon la revendication 4, caractérisé en ce que la base (1) et les éléments latéraux complémentaires (3a) et (3b) sont réalisés dans une composition élastomérique de même formulation, renfermant comme promoteurs d'adhésion des sels de cobalt, en ce que la couche thermoconductrice (2) est réalisée à partir d'une feuille de laiton comportant, sur la face qui n'est pas en contact avec la base (1) un revêtement noir, et en ce qu'un film, empéchant l'adhérence des éléments constitutifs, est interposé dans les zones destinées à créer les collecteurs/distributeurs (7) du circuit de fluide caloporteur ainsi que les canaux (6) du réseau d'échange thermique.

6°) Dispositif d'échangeur thermique-absorbeur solaire selon la revendication 4, caractérisé en ce que la base (1) et les éléments latéraux complémentaires (3a) et (3b) sont réalisés dans une composition élastomérique de même formulation, en ce que la couche thermoconductrice (2) est réalisée à partir d'une feuille d'acier inoxydable comportant, sur la face qui n'est pas en contact avec la base (1), un revêtement noir, et en ce qu'un adhésif est interposé entre les éléments constitutifs, sauf dans les zones destinées à créer les collecteurs/distributeurs (7) du circuit du fluide caloporteur ainsi que les canaux (6) du réseau d'échange thermique.

7°) Dispositif d'échangeur thermique-absorbeur solaire selon l'une des revendications 1 à 6, caractérisé en ce que les collecteurs/distributeurs (7) du circuit de fluide caloporteur présentent une section au moins égale à quatre fois la section des canaux (6) du réseau d'échange thermique.

8°) Dispositif d'échangeur thermique-absorbeur solaire selon l'une des revendications 1 à 7, caractérisé en ce que les collecteurs/distributeurs (7) du circuit de fluide caloporteur présentent un diamètre de l'ordre de 25 millimètres.

9°) Dispositif d'échangeur thermique-absorbeur solaire selon l'une des revendications 1 à 8, caractérisé en ce que l'entraxe des canaux du réseau d'échange thermique est au plus égal à 75 millimètres.

10°) Dispositif d'échangeur thermique-absorbeur solaire selon l'une des revendications 1 à 9, caractérisé en ce que la section des collecteurs/distributeurs (7) du circuit de fluide caloporteur est réduite ou obturée, de place en place, afin d'optimiser le circuit d'échange thermique.

11°) Dispositif d'échangeur thermique-absorbeur solaire selon la revendication 10, caractérisé en ce que l'obturation de la section des collecteurs/distributeurs (7) du circuit de fluide caloporteur détermine des échangeurs-radiateurs-absorbeurs modulaires qui peuvent être découpés sur une longueur d'au moins un module, les points d'obturation (T) évitant l'utilisation d'obturateurs additionnels et réduisant les risques de fuites.

12°) Dispositif d'échangeur thermique-absorbeur solaire selon l'une des revendications 1 à 11, caractérisé en ce qu'il est muni, sur chacun de ses bords, d'un profilé de rive (9), permettant son assemblage en parallèle avec un autre dispositif de même type, grâce à l'utilisation d'un profilé d'assemblage (11).

13°) Dispositif d'échangeur thermique-absorbeur solaire selon l'une des revendications 1 à 11, caractérisé en ce qu'il comporte, disposé longitudinalement et noyé dans l'épaisseur de la base (1), à proximité de chacune des rives de ladite base 5 (1), un câble (14) destiné à l'installation sur site.

14°) Dispositif d'échangeur thermique-absorbeur solaire selon l'une des revendications 1 à 12, caractérisé en ce qu'il comporte, disposée longitudinalement à proximité de chacune des rives de la base (1), une série d'oeillets (16) destinés à recevoir un câble (14) pour l'installation sur site.

15°) Dispositif d'échangeur thermique-absorbeur solaire selon l'une des revendications 1 à 14, caractérisé en ce que le dispositif de raccordement des collecteurs/distributeurs (7) aux circuits d'alimentation et de distribution du fluide caloporteur est constitué par une tubulure (25), maintenue dans ledit collecteur (7) par un écrou (26) venant appuyer la paroi du collecteur (7) sur un collet rigide (27), octogonal, solidaire de la structure.

16°) Dispositif d'échangeur thermique-absorbeur solaire selon l'une des revendications 1 à 14, caractérisé en ce que le dispositif de raccordement des collecteurs/distributeurs (7) aux circuits externes d'alimentation et de distribution du fluide caloporteur est constitué par une tubulure (25), munie de deux gorges (30), équipées de joints (31) et bloquée par deux demi-coques (32a) et (32b), serrées par des vis (33).

17°) Dispositif d'échangeur-radiateur-absorbeur isolé, caractérisé en ce qu'il est enroulable et en ce qu'il comporte, intimement liée à la base (1) du dispositif d'échangeur thermique-absorbeur solaire conforme à l'une des revendications 1 à 16, une couche isolante (34), réalisée dans un matériau polymérique cellulaire, d'une densité apparente au plus égale à 400 Kg par mètre cube et d'une épaisseur au plus égale à 25 millimètres.

18°) Dispositif d'échangeur-radiateur-absorbeur isolé, selon la revendication 17, caractérisé en ce que la couche isolante (34) est réalisé dans un matériau polymérique cellulaire réticulé, à base d'un copolymère d'éthylène et de propylène, à cellules fermées, ayant une densité apparente au plus égale à 200 Kg par mètre cube.

19°) Capteur solaire vitré, caractérisé en ce qu'il est enroulable et constitué d'un échangeur-radiateur-absorbeur isolé, conforme à l'une des revendications 17 ou 18, auquel est associé un vitrage (35), souple, réalisé à partir d'un film polymérique transparent.

20°) Capteur solaire vitré, selon la revendication 19, caractérisé en ce que le vitrage (35) est rendu amovible, donc remplaçable, par montage sur ledit capteur solaire vitré par l'intermédiaire de profilés d'assemblage (9) et (11).

FIG_1

YY

5a   2   5b

XX

4

1

## FIG. 2a

3a   2   3b

1

L1   I1   M   I2   L2

## FIG. 2b

FIG.3a

FIG.3b

FIG.3c

FIG.3d

FIG_4a

FIG_4b

FIG.5

FIG.6a

FIG.6b

FIG.6c

EP 0 321 351 A1

FIG. 7a

FIG. 7b

FIG. 7c

FIG_7d

EP 0 321 351 A1

FIG_8a

FIG_8b

FIG_8c

7    25    26

27

29

28

## FIG. 9a

33

31    32a

30

25

7    32b

## FIG. 9b

FIG_10

35

3a

3b

2

1

34

FIG.11

FIG.12a

FIG.12b

FIG.13

EP 0 321 351 A1

Office européen
des brevets

**RAPPORT DE RECHERCHE EUROPEENNE**

Numero de la demande

EP  88 40 3207

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,X | US-A-4 256 087  (SOWERS)<br>* colonne 4, ligne 39 - colonne 5, ligne 35 *<br>--- | 1-5 | F 24 J    2/24<br>F 24 J    2/36<br>F 24 J    2/46 |
| A,D | EP-A-0 070 757  (CENTRE NATIONAL D'ETUDES SPATIALES)<br>* page 2, ligne 3 - page 3, ligne 28 *<br>--- | 4,13,14 | |
| D,A | DE-A-2 747 188  (VEREINIGTE METALLWERKE RANSHOFEN-BERNDORF AG)<br>* page 3 *<br>--- | 4 | |
| A,D | DE-U-7 927 917  (SHELL SOUTH AFRICA LTD)<br>* page 7, paragraphe 2 *<br>----- | 19 | |

|  |  |
|---|---|
|  | **DOMAINES TECHNIQUES RECHERCHES (Int. Cl.4)**<br><br>F 24 J    2/00 |

Le présent rapport a été établi pour toutes les revendications

| Lieu de la recherche | Date d'achèvement de la recherche | Examinateur |
|---|---|---|
| BERLIN | 09-03-1989 | PIEPER C |